# EUROPEAN PATENT APPLICATION

(11) **EP 2 339 541 A1**
(43) Date of publication of application: **29.06.2011**
(21) Application number: 09180687.7
(22) Date of filing: 23.12.2009
(51) Int. Cl.: G06T 17/10

(54) **A computer-implemented method of geometric feature detection and modification**

(71) Applicant: FUJITSU LIMITED, Kawasaki-shi, Kanagawa 211-8588 (JP)
(72) Inventor: Chow, Peter, Gillingham, Kent ME7 3AH (GB); Southern, James Alastair, Reading, Berkshire RG2 0DJ (GB); Kubota, Tetsuyuki, Kawasaki-shi, Kanagawa 211-8588 (JP)
(74) Representative: Wilding, Frances Ward

(57) **Abstract**

A computer-implemented method of geometric feature detection and modification comprising: accessing a data file including a model of an object formed from basic geometric elements of the object, including lines, surfaces and at least one solid body element; using an outward normal vector of at least one surface in conjunction with the basic geometric elements to automatically detect a geometric feature of the object which is unsuitable for analysis; and modifying the unsuitable geometric feature to produce a modified model for analysis purposes.

## Description

The present invention relates to computer-aided design and engineering. In particular it relates to adaptation of a model created of an object in a computer environment in order to render that model more suitable for analysis. This modification process is most commonly found in design and manufacturing processes. For example, an engineer may design a component or complex part using a model in a CAD (computer-aided design) package such as AUTO CAD or Pro/ENGINEER and then wish to test the model for suitability of use. The design engineer may wish to analyse the model in simulations to determine heat resistance, propagation of electromagnetic or other fields or stress-strain properties. The simulation process can refine product design without entailing the cost of actual manufacture and physical test. However, it is often necessary to simplify the model so that can be more easily analysed.

Another application of a modification process for a model is in simplification of architectural models of buildings, for example for providing/improving airflow or ventilation or for fire simulation.

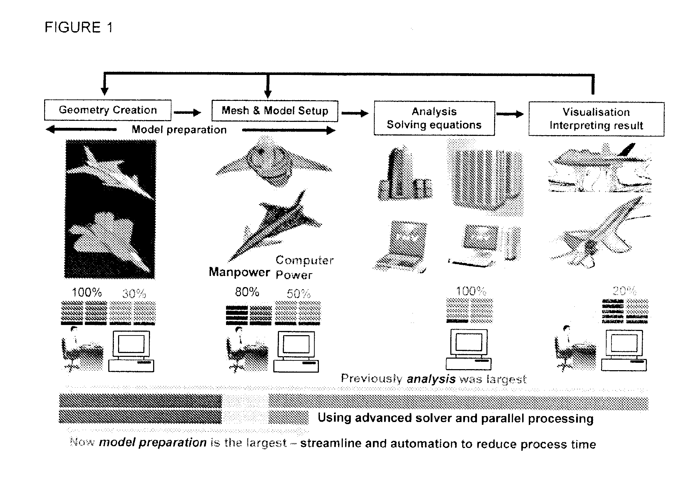

Figure 1 shows an overview of the simulation process chain frequently found in design and manufacturing processes. The primary stages are as follows:
1. Geometry Creation: this is creating geometric model in the spatial domain. Models are commonly created using a Computer-Aided Design (CAD) system.
2. Model Setup: this is preparation, for example model modification, mesh generation and setup of model analysis conditions. Models usually require modification (sometimes known as defeaturing) to make them suitable for analysis/simulation. Automatic and fast mesh generation is available for both structured (finite difference) and unstructured (finite element) meshes. The setting of model analysis conditions is dependent on the type of analysis, for example, heat flow analysis, fluid flow analysis and stress analysis.
3. Analysis: this is using a computer system to undertake simulation and analysis.
   Analysis may include calculation to numerical solution of mechanical stress, fluid flow, electromagnetic, etc. important to design and manufacturing. Analysis used to be the most time consuming stage in the entire process but using parallel processing and advanced numerical methods this is no longer the case. With stages 2 and 4, analysis is referred to as Computer-Aided Engineering (CAE).
4. Visualisation, this is the opportunity to view and interpret analysis results.
   Commonly 3D animations and plots of field values against specific parameters such as time, energy, etc. are used to aid engineers and designers.

Today, the most time consuming elements in CAD/CAE are usually in the model preparation processing. In the automobile industry it is reported to be over 80 per cent of the total time. A significant part of this is to do with modifying CAD models to make them suitable for a specific type of CAE application. If we can introduce automation and streamlining into the procedure and process then further efficiency improvements can be achieved.

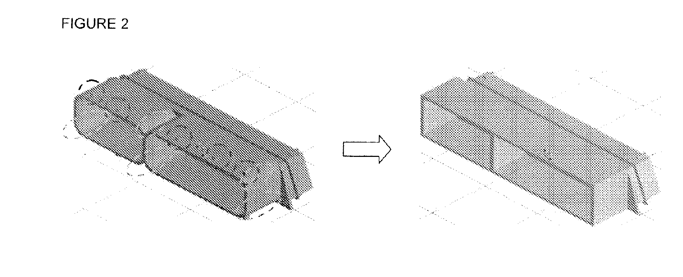

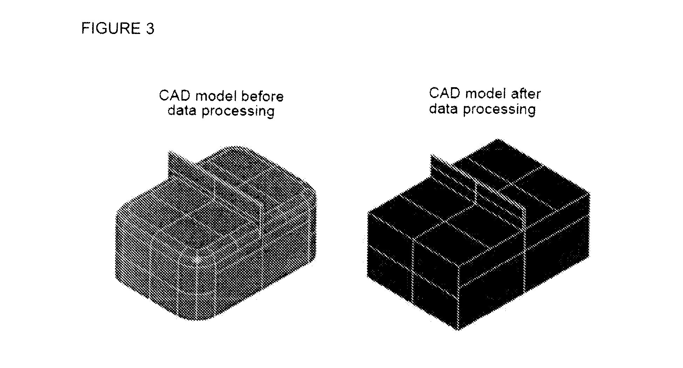

The linkage of CAD and CAE is a recent event. There are many incompatibilities and challenges that need to be overcome. A general solution to the problem is not near the horizon due to the many CAD systems and many more CAE applications. Obviously a tight coupling between CAD and CAE would provide a good solution to model modification and shorten the CAE processing time. In the case of simplification, non-essential features may then be specified in the CAD system which thus can output models precisely for a particular CAE application. This is feasible given full control of the CAD model creation history and CAE applications. Figures 2 and 3 show some examples of CAD models before and after simplification. In Figure 2, the original model is shown on the left, while one resulting from removing small features and blend (radius) simplification is on the right. Far fewer and simpler elements are required to represent the modified geometry. Figure 3 has the same "before and after" arrangement, from which it can be seen that the modified model on the right requires fewer and simpler elements to represent it than the full model shown on the left. This will lead to shorter analysis time.

The advantages of not including non-essential and small features can be that the reduced model size in the mesh leads to shorter analysis; and/or that, for transient simulation, bigger time-step sizes can be used, leading to a smaller number of time-steps for any required time interval and thus shorter analysis time.

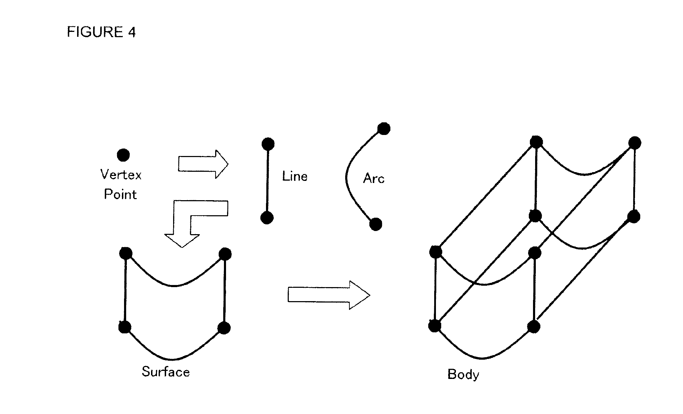

In situations where the CAD models are from third parties and/or multiple CAD systems are involved then it is very complicated to remove or modify non-essential features. This is because model creation history is not contained in the CAD model file, only the spatial geometric description in the basic elements of vertex point, line, arc, surface, body, and their topology relationship. Figure 4 shows the basic geometric elements as an example, in which points are joined by straight lines/arcs to form a surface (or surface element) and surfaces are combined to form a body. In the special case of a cylinder, no vertex points are necessarily required. Some CAD packages support the full definition of a cylinder without vertex points. Other conventional CAD packages do not and instead use a definition of two half-cylindrical surfaces, allowing the introduction of vertex points for each and every geometric surface defined.

The related art strategies to address the CAD-to-CAE model in the situation that the CAD model does not specify which geometric features are non-essential and unsuitable for analysis are:
1. Surface wrapping: this is effectively shrink-wrapping a surface mesh onto a geometric model (in a manner which can be visualised as wrapping "cling film" over the model, closing holes, joining disconnected and overlapping surfaces, minimising small features, etc. to provide a single continuous and generally smooth surface. This can be fully automated but is not suitable for structured meshes (such as finite difference meshes), at least partly because it tends to produce geometrically complex surfaces and curves.
2. Removing and/or modifying geometric features in the CAD model. This strategy offers the most flexible solution and is suitable for all CAE applications. In the related art it is currently possible to automatically detect circular-section through-holes, blends and chamfers, and to remove these features, as long as they are not present in conjunction with other features Other features cannot be automatically handled and manual model modification is required. The main difficulty is in detection of the features for processing. Once detected the processing (for example with Boolean operators) can be relatively straightforward compared to detection.

In situations where automatic/computerised detection is not available, detection must be manually specified. This task is labour intensive and time consuming. Efficiency improvement is not possible without some more automatic detection tools.

It is thus desirable to eliminate or at least mitigate some of the disadvantages of the prior art to allow automatic modification of a geometric model in an efficient way.

An embodiment of a first aspect of the invention provides a computer-implemented method of geometric feature detection and modification comprising: accessing a data file including a model of an object formed from basic geometric elements of the object, including lines, surfaces and at least one solid body element; using an outward normal vector of at least one surface in conjunction with the basic geometric elements to automatically detect a geometric feature of the object which is unsuitable for analysis; and modifying the unsuitable geometric feature to produce a modified model for analysis purposes.

The method of invention embodiments uses just the CAD model file with its definition of basic geometric elements in conjunction with an outward normal vector of at least one surface to detect and modify geometric features which are unsuitable for analysis. Such unsuitable features may be selected using predetermined criteria adapted for the analysis and/or simulation required by the design engineer. They are detectable because the combination of the outward normal vector and geometry relating to the feature together give a characteristic signature of the geometric feature concerned.

As the skilled reader will appreciate, the term "outward normal vector" refers to a vector perpendicular to a surface. On a closed surface the inward-pointing normal points toward the interior of the surface and the outward-normal vector points towards the exterior of the surface. Thus essentially the outward normal vector is used to indicate the side of the surface that is on the outside of the solid body. Any other properties of the vector are not important.

The data file may be any file which is used to define a 3D object in a computer environment and need not itself define outward normal vectors of surfaces. Of course the data file may in fact also include outward normal vectors of surfaces and other information but the method of invention embodiments requires only basic geometric data. This is particularly advantageous because all the different formats used for storing CAD information must at the very least contain such information.

In one preferred method, the detection of an unsuitable geometric feature includes calculation of an outward normal vector for a surface and for at least one neighbouring surface. Depending on the unsuitable geometric feature, the outward normal vector for three or more surfaces may be required.

As an exception, for a cylindrical hole as defined in some CAD packages, just one outward normal vector may be detected, allowing detection and modification of the hole. The outward normal vector is that of the full cylindrical surface defined in the CAD package. As an aside, CAD packages usually include the definition of nominal surfaces delimiting the hole, one delimiting the "top" of the hole and other delimiting the "bottom", however the normal vectors from these nominal surfaces is not necessarily required to detect and modify such cylindrical holes.

In a different example, in order to detect an edge finish such as a chamfer, blend (radius) or other similar structure, the outward normal vectors of the edge finish itself and the outward normal vectors of the planar surfaces which intersect at the edge finish can be calculated. Initially, the small area surface of the edge finish may be detected (for example as a part of a cylindrical surface for a blend), and then its outward normal vector and the outward normal vectors of its (planar) neighbouring surfaces may be calculated.

Detecting an unsuitable geometric feature may thus include identification of a set of surfaces forming a discrete feature and calculation of outward normal vectors of that set of surfaces. The feature may be viewed as discrete and the surfaces as adjacent in that no surface of the feature is separated from all the other surfaces of the feature. The adjacent set of surfaces may be referred to as a closed loop of surfaces. The edge finishes mentioned above and their neighbouring surfaces form such a closed loop.

In another example, a through-hole or through-bore (referred to herein as a hole) may be defined in some CAD packages that do not support full cylinder definitions to include two half-cylindrical surfaces with outward normal vectors pointing inward. These two surfaces form a closed loop (as does the equivalent geometrical definition of a single cylindrical surface). If the definition of the hole includes two nominal surfaces, one delimiting the "top" of the hole and other delimiting the "bottom", these represent surfaces which may also form part of the set of adjacent surfaces. Similarly, the surfaces of a cylinder defined with two half-cylindrical surfaces forming a closed loop have outward normal vectors pointing away from each other and a top and bottom surface each with an outward normal vector pointing away the other flat surface vector.

The skilled reader will appreciate that the geometric properties and outward normal vector(s) in each case together give a recognisable characteristic signature of the unsuitable geometric feature.

Once the unsuitable geometric feature has been detected using one or more outward normal vectors, the feature may be modified. The type of adaptation applied to the feature is any which is suitable for making the model as a whole easier to analyse. In preferred embodiments the modification applied to the unsuitable feature may fall into one of two categories; reshaping or removal.

In many situations, small features can be removed to make the analysis of the model simpler without having a significant effect on the results of the analysis. Of course this depends on the model itself and type of analysis applied and will vary on a case-by-case basis.

Some larger features which cannot be removed without affecting the results of the analysis may be modified to make the calculation in analysis simpler. For example and particularly in finite difference methods, curved surfaces can make calculation in analysis much more time-and-resource-intensive. In this and other cases, features can be modified, for example to remove curves. For instance, a curved surface may be rendered as a plurality of flat surfaces which together give approximately the same configuration as the curved surface.

Turning in more detail to the geometric features which may be viewed as unsuitable, one unsuitable geometric feature is a cavity, hole (concave features), protrusion or solid body (convex features) of any shape but smaller than a predetermined size and a corresponding modification is removal of the small unsuitable geometric feature. This is the case in which smaller features can be removed. The size of the feature may be determined for example according to volume of the feature or other size parameter of the feature or of one or more individual surfaces making up the features. The computer system used by the designer may have a small feature volume parameter which can be set by the designer. Typical small unsuitable geometric features can be nuts, bolts and washers (solid bodies) which are present in the model in conjunction with other larger parts. These parts can also potentially be detected by part number in a CAD/CAE design package in which case the specific step of their detection does not fall within the scope of the invention. Other small geometric features may be small holes, small cavities (that is any shape of blind hole smaller then a certain size), and protrusions which form a projection on a larger surface. As the skilled reader will appreciate, all of these small geometric features are formed from a closed loop of surfaces as defined hereinbefore.

Preferably the small unsuitable geometric features are detected by sorting the surfaces of the model in size order and checking starting with the smallest surface for a closed loop of surfaces including that surface. If there is more than one type of small unsuitable geometric feature, the different types may be processed in a predetermined order. It may for example be difficult or incorrect to remove a small hole which contains a small bolt, therefore the method could process small solid bodies before small holes

In some invention embodiments, any small unsuitable geometric features are detected and removed before other types of unsuitable geometric feature other unsuitable are processed.

It can be convenient to process remaining unsuitable features in a main processing loop part by part after any small features have been removed. Thus, if the object comprises more than one solid body element, preferred embodiments may remove any small unsuitable features first and then process each solid body element in turn to detect and modify other unsuitable geometric features.

As mentioned above, another potential unsuitable geometric feature in some circumstances includes a curved surface. Thus preferred embodiments of the invention detect a hole, a protrusion or a solid body with a cross section having a curved surface. A corresponding modification is to change the shape of the curved surface(s), for example to provide more then one flat surface replacing the curved surface. For many applications it is important to conserve the length and volume of the feature in the process of changing the shape of the cross section. For example, for a larger circular hole or cylinder the single curved (cylindrical) surface may be rendered as four flat surfaces to give a square or rectangular cross section shape. If a better approximation of the circular or overall cross section is required, then the cross section may be approximated using more than four corresponding surfaces to replace the single curved surface of the cylinder/hole.

As mentioned above, another example of an unsuitable geometric feature is an edge finish. Such an edge finish is generally applied at an intersection of two or more surfaces and may be a chamfer, radius or blend (which is used herein to refer to a curve joining two or more surfaces which may be a part of a cylindrical surface or have any other curve configuration). In this case a corresponding modification may be reshaping of the edge to omit the edge finish. This reverses the effect of the edge finish and reinstates the continuity of the planes of the surfaces at the intersection. Such edge finish features may be detected by detecting a small surface having an outward normal vector at approximately 45° to each of the outward normal vectors at either side of it. Similar methodology can be applied to other formations. Another potentially unsuitable geometric feature is a folded over portion of a sheet, such as a metal sheet. This deformation provides a small curved surface at the fold and a double layer. In preferred embodiments the folded-over portion can be detected as two quarter cylindrical surfaces, each with an outer normal vector at right angles to a neighbouring larger parallel surfaces, or as a single half-cylindrical surface, with an outer normal vector perpendicular to the normal vectors of surfaces to either side of it.

In general, if the geometry has been defined in terms of quarter cylinder surfaces, they may be merged in pre-processing to minimise the surfaces considered. Equally, two half cylindrical surfaces may be combined as a single cylindrical surface.

The skilled reader will appreciate that many different unsuitable geometric features can be detected and modified according to their characteristic signature using the methodology set out in this application and that the scope of the application is not limited to the features specifically discussed but rather to any feature that can be detected using outward normal vectors of two or more (or even just one) surface(s) in conjunction with other geometric properties of the surfaces.

In many invention embodiments, more then one unsuitable geometric feature is detected and removed. As set out above, small features may be detected before any other features. Additionally or alternatively, there can be a set order of detection of all the different types of unsuitable geometric feature. This may be useful to facilitate removal of a variety of types of unsuitable geometric features. Particularly, it may be difficult for the software to detect one feature if it is present in conjunction with another. Thus overlapping and/or adjoining unsuitable geometric features may need to be detected and removed in turn. For example, the method may detect a certain type of feature such as a small hole and remove all the holes from the model, including holes situated on blends, before removing blends.

After at least one unsuitable geometric feature has been removed, the method may further include analysing the modified model to simulate conditions when the object is in use, such as by simulating mechanical stress or heat flow or fluid flow or electromagnetic fields to which the object is exposed. Preferably, the analysis method is a finite-difference method using a structured mesh. However the detection and modification method of invention embodiments has applications to finite element methods using unstructured meshes, particularly for the removal of small features. Invention embodiments may also provide feature modification suitable for use with any other analysis method.

Embodiments of the invention also relate to a graphical user interface providing a user with an interface for instructing and implementing a method of geometric feature detection and modification. A GUI is usually essentially a computer software package and is executed on a computing device such as a terminal which has access to computing resources for carrying out the method according to the invention. According to an embodiment of a further aspect of invention there is therefore provided a computing device having a graphical user interface and providing a computer-implemented method of geometric feature detection and modification using the interface, wherein the interface is operable to display an original representation of a data file including a model of an object formed from basic geometric elements of the object, including lines, surfaces and at least one solid body element; to highlight on the representation a geometric feature of the object which is unsuitable for analysis and which has been detected using an outward normal vectors of at least one surface in conjunction with the basic geometric elements; and to display a modified representation of the model with a modified unsuitable geometric feature.

The GUI may be used for the entire detection and modification process or once an automatic method has been run without specific user interaction, to show which features were detected as unsuitable but could not be automatically modified for some reason. The user can then try to manually or automatically modify the unsuitable features that remain. It could also potentially be used before an automatic method, to address in advance features that are difficult to modify without user intervention.

The GUI employs the outward normal vector methodology of the invention to detect at least one unsuitable geometric feature and is operable to display both the detected unsuitable feature (for example using highlighting) and to display the representation of the model once the detected unsuitable geometric feature has been modified.

The GUI may also be provided with functionality to allow the user to influence processing by inputs. For example, the GUI may have a menu structure with a menu allowing the user to select which unsuitable feature to remove/modify.

It is of course of assistance to the user to view the modifications that have been made at any step of the process and also to decide whether or not to accept the modifications. Therefore the interface may be operable to display a representation and the modified representation simultaneously. Preferably the modified representation is a preview which may be accepted or rejected by the user.

At least in some circumstances it is advantageous to be able to identify easily which features have failed in the process. Preferably therefore the interface is also operable to display a representation of the model highlighting geometric features which have been selected for modification, but could not be automatically modified.

In an embodiment of another aspect of the present invention there is provided a computer program which when executed on a computing device provides a computer-implemented method of geometric feature detection and modification comprising: accessing a data file including a model of an object formed from basic geometric elements of the object, including lines, surfaces and at least one solid body element; using an outward normal vector of at least one surface in conjunction with the basic geometric elements to automatically detect a geometric feature of the object which is unsuitable for analysis; and modifying the unsuitable geometric feature to produce a modified model for analysis purposes.

According to an embodiment of yet another aspect there is provided a computer program which when executed on a computing device provides that computing device with a graphical user interface implementing a method of geometric feature detection and modification, where the interface is operable to display an original representation of a data file including a model of an object formed from basic geometric elements of the object, including lines, surfaces and at least one solid body element; to highlight on the representation a geometric feature of the object which is unsuitable for analysis and which has been detected using an outward normal vectors of at least one surface in conjunction with the basic geometric elements; and to display a modified representation of the model with a modified unsuitable geometric feature.

According to an embodiment of a still further aspect of the invention there is provided a computer aided engineering system comprising input and output functionality and computing resources operable to carry out a computer implemented method of geometric feature detection and modification comprising; accessing a data file including a model of an object formed from basic geometric elements of the object, including lines, surfaces and at least one solid body element; using an outward normal vector of at least one surface in conjunction with the basic geometric elements to automatically detect a geometric feature of the object which is unsuitable for analysis; and modifying the unsuitable geometric feature to produce a modified model for analysis purposes.

The computer aided engineering system may comprise a single computing device or a network of linked computing devices having central or distributed computing resources capacity. In the latter case the method and GUI functionality may be shared between users at different terminals. The input functionality may read in a CAD file and the output functionality may produce a CAD file of the same or a different format.

Features and sub-features of any of the aspects all form part of the same general invention concept and may be freely combined unless clearly incompatible.

Preferred features of the present invention will now be described, purely by way of example, with reference to the accompanying drawings, in which:-
Figure 1 is a schematic diagram showing a simulation process chain and processing time;
Figure 2 is a 3D representation of a geometric model and modification to provide a simplified model;
Figure 3 is a 3D representation of a geometric model and modification to provide a simplified model;
Figure 4 is a schematic diagram of basic geometric elements and their combination to form a body element;
Figure 5 is a flowchart of a general embodiment of the invention;
Figure 6a shows planar and curved surfaces with line direction and outward normal vectors;
Figure 6b shows outward normal vectors in a hole and cylinder;
Figure 7 shows a cylinder and a cuboid tower feature with associated outward normal vectors;
Figure 8 shows pyramid and arbitrary tower features with associated outward normal vectors;
Figure 9a shows modification of an oval or other curved cross-section or other curved cross-section part or hole;
Figure 9b shows modification of a bend of sheet metal,
Figure 9c shows modification of a cylindrical feature;
Figure 9d shows modification of blends on a cross section;
Figure 9e shows modification of chamfering on a cross section;
Figure 9f shows removal of a small hole,
Figure 9g shows removal of a small tower,
Figure 9h shows removal of small parts, such as screws, washers and filling of the holes through which these parts pass;
Figure 9i shows removal of a small hole on a blend;
Figure 9j shows removal of a small hole on the boundary between a blend and a plane;
Figure 9k shows removal of a hole and a small pressed feature;
Figure 9l shows removal of a valley to form a flat surface;
Figure 10 shows a flowchart of automatic CAD model processing;
Figure 11 shows an outline of the display GUI environment;
Figure 12a shows a flowchart of basic GUI processing;
Figure 12b shows a flowchart of GUI auto detector feature;
Figure 12c shows a flowchart of GUI feature processing;
Figure 13a shows a screen layout of a GUI demonstrating a first feature modification step;
Figure 13b shows a screen layout of a GUI demonstrating a second feature modification step; and
Figure 13c shows a screen layout of a GUI demonstrating a third feature modification step.

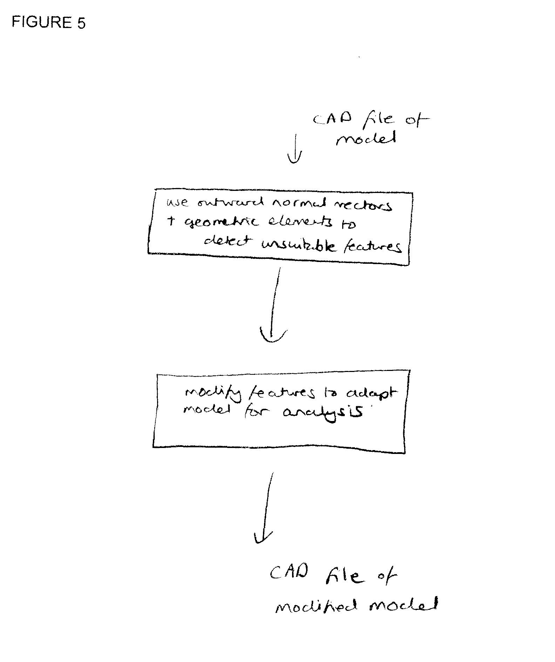

Figure 5 shows a flowchart according to a generalised embodiment of the invention. Invention embodiments are preferably software implemented on a computer terminal which has access to computing capacity to carry out a detection and modification method. Initially a CAD file defining a model of a 3D object is read into the terminal.

The geometric definitions in the CAD data file are used together with calculated outward normal vectors of surfaces to detect unsuitable features. The features may be those that are deemed to be unsuitable for efficient analysis in a CAE simulation. In a further process one or more of these features is modified to make the model better suited for analysis. The outcome of the method can be viewed as a simplified CAD file, that is a CAD file with an approximated version of the model which is better suited for analysis.

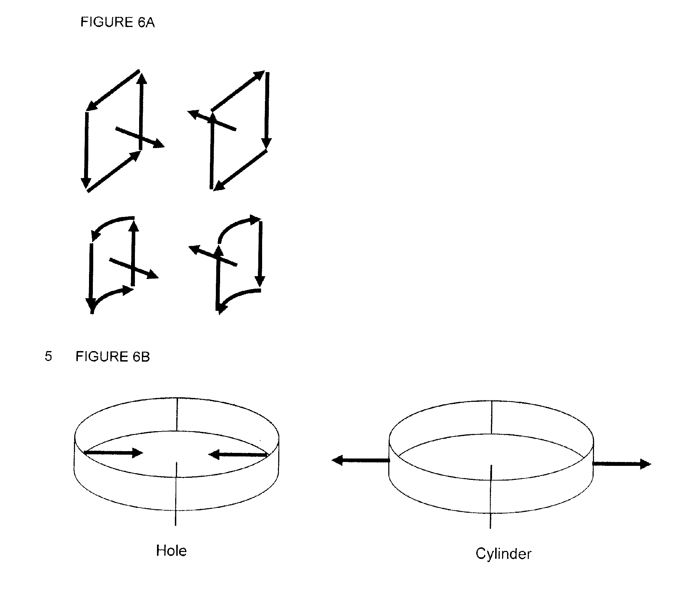

Invention embodiments provide an automatic detection tool for detecting small features and/or other unsuitable features in CAD models. The tool requires basic geometric elements common to all CAD models, namely vertex points, lines and arcs, joining the vertexes to form surfaces and their connection as a body as shown in Figure 4. The CAD model is a solid body or an assembly of solid bodies. Each solid body is a topology set connecting the entities of basic elements. With this information the outward normal vector for each surface may be calculated. Figure 6a shows the outward normal vectors associated with surface topology.

In circle-hole cases the outward normal vectors for the associated conventional two half-cylindrical surfaces are both pointing inward, towards the centre. To complete a through-hole, nominal top and bottom surfaces can be defined with opposite outwardly directed normal vectors. For a cavity, the top and bottom surfaces have normal vectors pointing in the same direction, out of the hole.

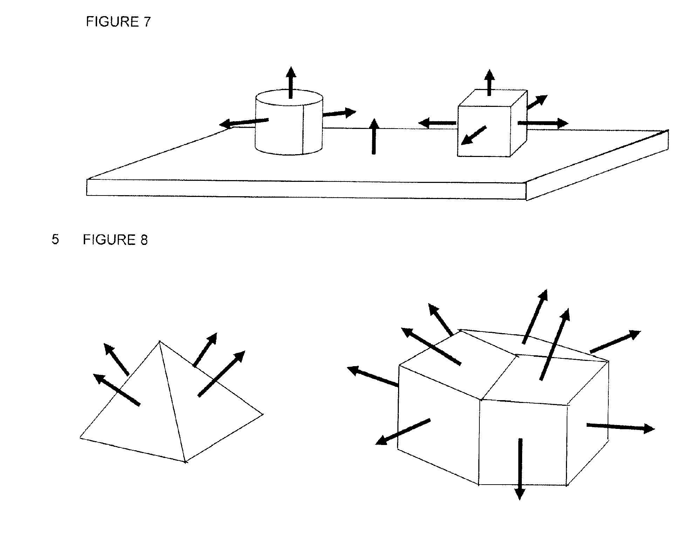

For cylinders the two outward normal vectors for the half-cylindrical surfaces are pointing away from the centre, as shown in Figure 6. The outward normal vectors of the top and/or bottom surfaces (not shown) complete the cylinder. One defined top or bottom surface would make the cylinder a protrusion, and two would make it separate solid body. Figure 7 shows the outward normal vectors for a cylinder and cuboid towers on a planar surface. Figure 8 shows similar outward normal vectors for a pyramid and an arbitrary tower. For solid features that are attached to the main body (protrusions), the surfaces form a closed loop with all the outward normal vectors pointing away from the centre of the feature. Only the main body outward normal vector (belonging to the surface from which the solid features protrude) points into the feature.

Invention embodiments can determine if a feature is small or not by comparing to a specified parameter such as calculating the volume of the arbitrary shape and comparing to a small feature volume parameter value. This parameter can be set by the user or from experiment for particular kinds of model.

To locate small features, the process may start by calculating the area of surfaces and then order these in sequence of size. Naturally, the smallest surface area has a high chance that it is associated with a small feature. Checking there is a closed loop of surfaces with a characteristic signature as described previously, small features are detected. Repeating the process for the other surfaces, all small features can be detected.

Once all small features have been processed, other unsuitable geometric features can be detected.

For example, in detecting either a blend or chamfer, the software can search for a small surface which is either curved or flat and whose outward normal vector is at around 45 degrees to outward normal vectors of major surfaces on either side of it.. A fold may detected as two quarter cylindrical surfaces and the corresponding neighbouring major surfaces sandwiching the quarter cylindrical surfaces.

All these edge finishes may be on external junctions or internal junctions. Thus, material may be removed to create them (on the external junctions) or added to create them (on internal junctions). The edge finishes may be at the intersection of two surfaces or at three or more surfaces.

The feature processing order is important to both processing speed and processing success. Basic feature types can be detected very efficiently using the detection method described in herein before. The process of removal or reshaping can also be implemented efficiently. Using these basic feature types in combination and more importantly in a preferred order of execution provides a very powerful tool to CAD model processing. Large and complicated models can be processed in this way. Naturally, adding extra feature types provides more ways to process more types of CAD models, either as new feature type or a combination set. A combination set uses existing predefined unsuitable geometric features (or feature types) to process complex features without actually creating a new type with a different characteristic signature, by simplifying the complex feature one feature element at a time.

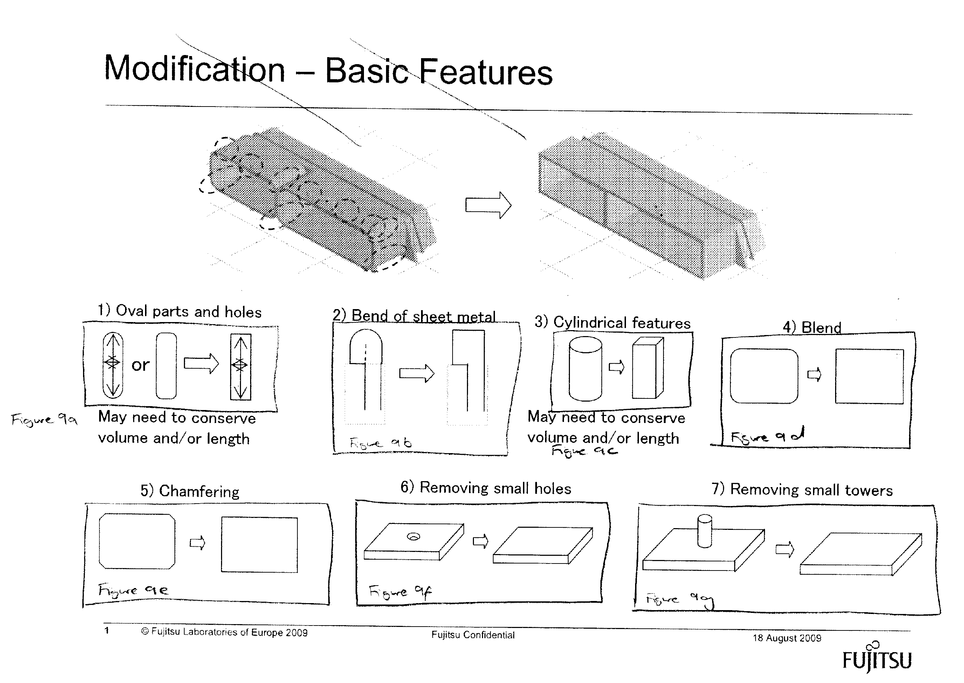

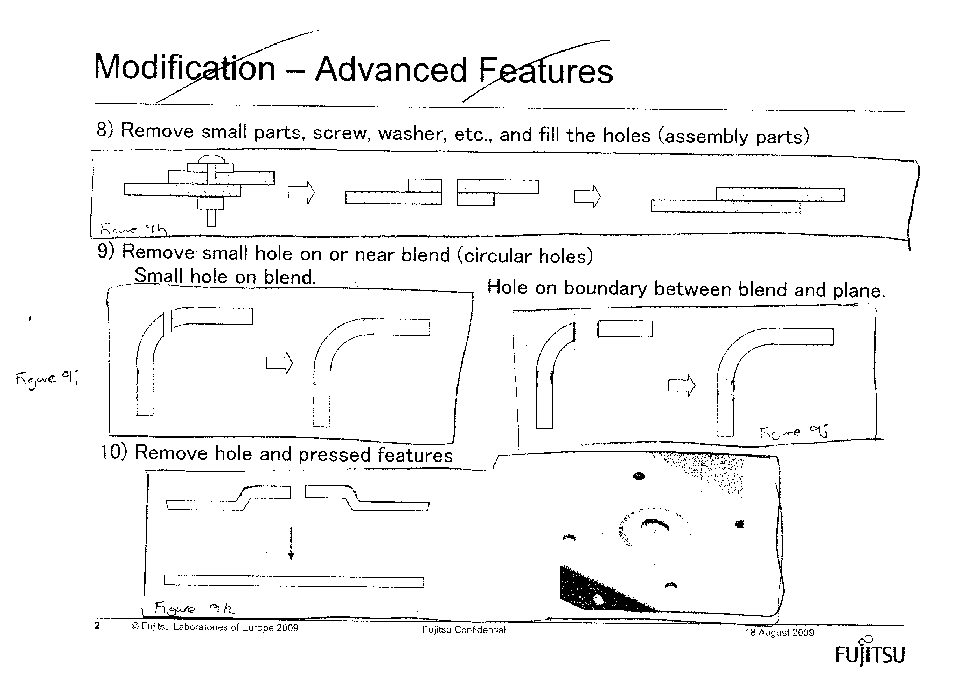

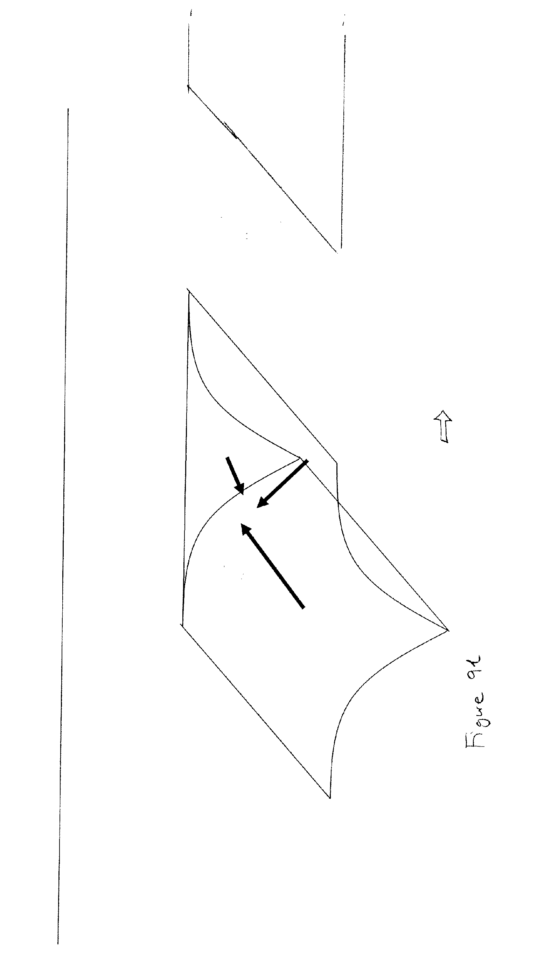

Figure 9 shows a variety of features that can be modified for by reshaping or removal according to the invention embodiments. The modification processing can be fully automated by processing one geometric feature at a time

Figure 9a shows the processing of an oval part or hole, or in more general terms a part or hole with a curved surfaces, so that there is a curved portion of its cross section, to form a cross section with straight edges, shown here as a rectangle. The software detects the closed loop of surfaces and curved surfaces to identify this type of unsuitable feature. As mentioned above, dependent on the kind of analysis required after the model has been modified, it might be necessary to conserve the volume and/or length of the part that is modified.

Figure 9b indicates how a bend finish at the edge of a sheet of metal can be modified to provide a thicker portion with straight edges. Here a small half-cylindrical surface (perhaps formed from two small quarter-circles surfaces in pre-processing) can be detected, along with the angle to the surfaces on either side of it using normal vectors.
For the modification the cylindrical surface is squared-off. The folded over portion is also considered as a single thicker portion of metal forming a border at the edge of the metal sheet.

In Figure 9c a cylindrical feature is modified to form a square cross-section feature. The software detects a closed loop and curved surfaces of the closed loop. As before, we may need to consider the volume and or length of the feature.

In Figure 9d blends are removed from a cross section using software to search for a right angle between two planes and cylindrical curves between the two planes.

In Figure 9e chamfers are removed in a similar fashion.

In Figure 9f a small hole (which might be an oval cross section hole or a slot etc) is removed by detection of the cylindrical/half-cylindrical surfaces and their normal vectors. Correspondingly in Figure 9g a small tower is removed. This tower is treated in a similar manner to the cylindrical feature shown in Figure 9c, by detection of a closed loop of surfaces, the only difference being that the bottom surface of the protrusion is not defined.

Figure 9h shows a combination set of parts for modification. Firstly, small parts are removed and then the holes into which the small parts fitted are removed, as described for Figure 9f.

In Figure 9i a combination set of a small hole on a blend is removed whereas Figure 9j shows a hole in the boundary between a blend and a plane being removed. Here the notional end surfaces (top and bottom surfaces) of the hole are at an angle to each other and to the cylindrical surface. Previously may not have been possible to automatically detect such holes, but the methodology of invention embodiments can detect and remove them. Figure 9k shows a pressed feature with a blend and a hole within the pressed feature being removed. The normal order of modification would be to first remove the blend applied to the edge of the pressed cavity. Then the through-hole is detected and removed. Next a different feature type is used to identify the pressed cavity, with its top and bottom surfaces having an adjoining surface on the outer edge that is non-planar and circular based (here frusto-conical). Alternatively, the pressed cavity and through-hole can be removed together as a single process.

Finally, 9l shows a small valley which is removed to form a flat surface. The software identifies the valley as an irregular blend.

The CAD model processing tool of invention embodiments can be made to process CAD models automatically with given instructions or scripts of the processing sequence of feature types so that the order of execution is pre-set. For example, automatic model processing of removing holes, blends and cylinder towers can use an equivalent to the following pseudo-code instructions. To process all feature types, the instruction can be "Process-Feature-Type: All".
Load-File: CAD_Model.stp
Process-Feature-Type: Hole
Process-Feature-Type: Blend
Process-Feature-Type: Cylinder-Tower
Save-File: Modified_CAD_Model.stp

After a feature type has been processed the following information may be written to a log file.
1. Number of features found.
2. Number of features failed in the modification process (optionally with feature identification).

On completion of a process of invention embodiments, the result may be saved to either the original CAD model format or to a different CAD model format from the input instruction.

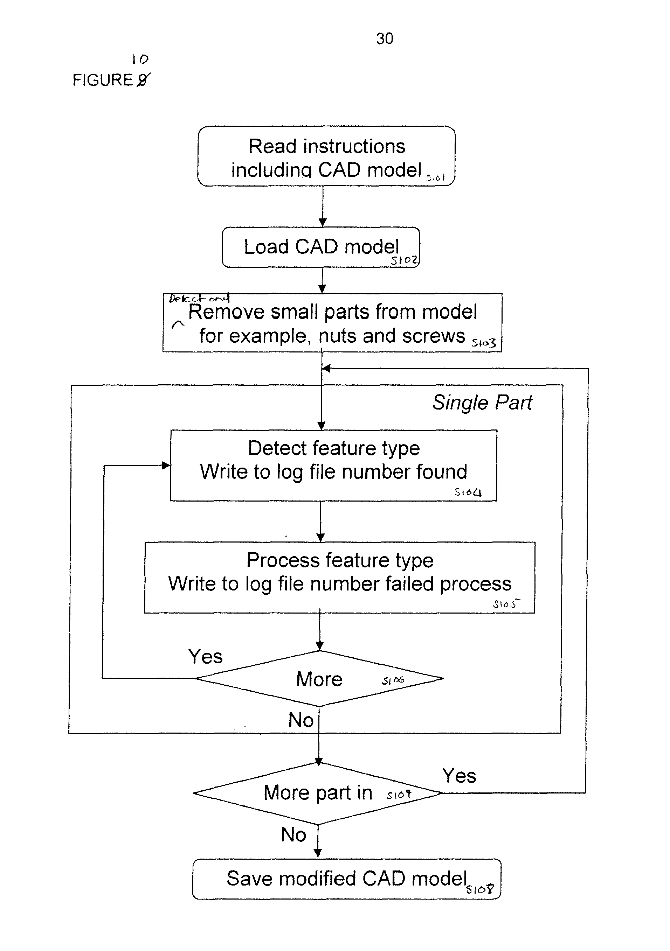

Figure 10 is a flowchart of automatic CAD model processing according to invention embodiments.

Instructions such as parameters are read with the CAD model in step S101. In step S102 the CAD model is loaded. In step S103 before the main loop, small parts are detected and removed. The main loop is performed for each single part (or solid body element). For each part a feature type is detected and the number of this type of feature found written to a log. The detected/features are then processed. Any failed features are also written to a log. It is determined if there are more feature types remaining for processing in step S106 and if so the next feature type is processed. The feature types may be processed in a predetermined order, for example in the order defined by the pseudo-code set out hereinbefore. Once there are no more feature types to process, the processing is finished for that part. Next it is detected in step S107 if there are more parts and if so a next part is selected and the main loop repeats. Once all the parts have been processed the modified CAD model is saved in S108.

In cases where features failed in the modification process, the graphical user interface part (see next section) can provide a valuable tool to help users, first to see the failed features (by running feature detection), then to help remedy the problem.

Some objects of the GUI tool of various invention embodiments are to:
1. Provide users with a graphical environment with processing tools for CAD model processing - with the automatic feature detection and modification technologies described above for the automatic CAD model processing (AMP).
2. To view the features failed in the modification process of AMP tool (perhaps first to run feature detection to show these features) and then help users towards a remedy with toolset functions in the GUI.
3. To develop new combination feature sets for efficient automatic processing in the AMP tool. This is every valuable for new feature types and new CAE applications.
4. To give the ability to view and share models between users at different locations via a network/communication medium.

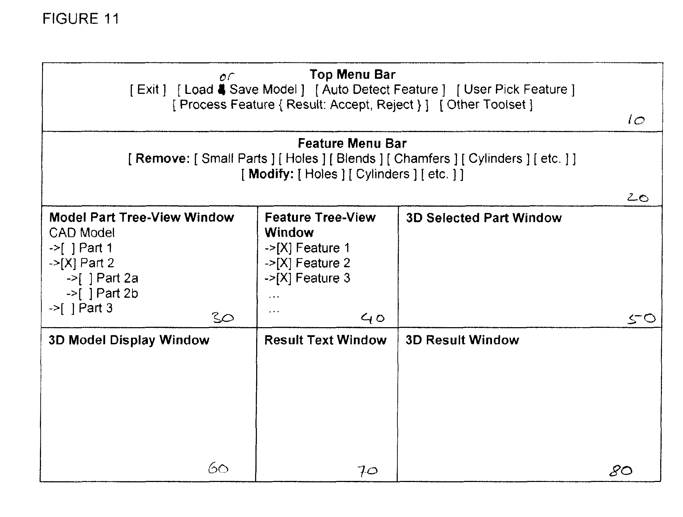

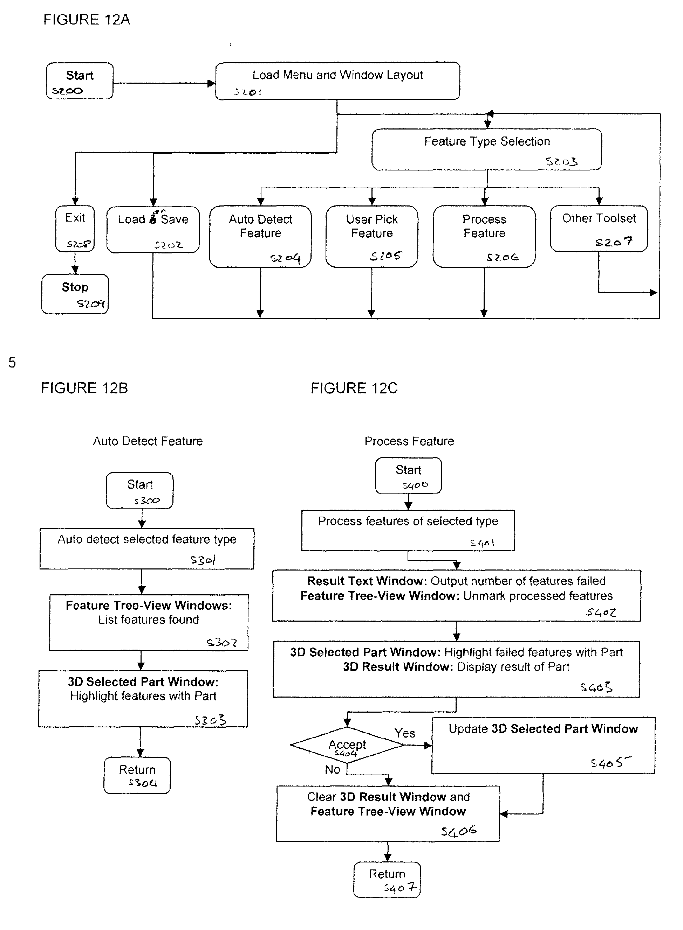

The GUI aspect provides a graphical environment with 3-dimensional display of CAD models. User input functionality may be provided conventionally, with for example a mouse and a keyboard. Figure 11 provides an outline of an on-screen display environment, and Figure 12 is the flowchart of the GUI CAD model processing.

Figure 11 shows an outline view of a GUI front end according to the present invention. A top menu bar 10 provides basic features of exit, load and save model, auto detection, user pick feature, feature processing with the results of accept or reject and any other suitable tools. A feature menu bar 20 below the top menu bar gives selected capabilities of removing small parts, holes, blends, chamfers, cylinders and other parts or modifying for example holes and cylinders as well as other parts.

In the screen portion below the feature menu bar the screen is divided into three; a model part tree-view window 30 indicating which part of a model is being processed, a feature tree-view window 40 showing the features being processed and a 3D selected part window 50 highlighting detected features. In the lowermost portion of the screen there is also a division into three windows, a 3D model display window 60 which shows an representation of the model, a result text window 70 which gives the result of a process in text form, for example listing features detected and a defeaturing

(modification) result. Finally a 3D result window shows the part as modified by the process.

Figure 12a shows an overall logical flow of functions within a GUI according to invention embodiments. The process starts at step S200 and in step S201 the menu and window layout is loaded. At step S202 a model is loaded or saved. Once the model has been loaded and saved into the system the process can continue with a feature type selection S203. For example, the feature selected may be a hole of under a certain diameter. In step S204 such features may be detected. In step S205 the user can manually pick the feature. In step S206 the feature is processed. Step S207 provides any other relevant functionality. At any point after one of these steps, a new model can be loaded or the current model saved and the process can exit in step S208.

Figure 12b is a more detailed flow chart of the auto detect feature of step S204 on Figure 12b. The process starts at S300 and auto detects a selected feature type in step S301. In the next step S302, the features found are listed in the feature tree-view window shown in Figure 11a. In step S303 the features are highlighted on the part which is currently undergoing processing in the 3D selected part window.

Figure 12c is a more detailed explanation of the process feature step shown as S206 in Figure 12a. The processing starts at S400 and processes features of the selected type in S401. In S402 the result text window outputs a number of features failed and the feature tree-view window unmarks processed features. In step S403 the 3D selected part window highlights failed features on the part and the 3D result window displays the results of the processing. If the result is accepted by the user in step S404 then the 3D selected part window is updated, if not the 3D result window is cleared and the feature tree-view window is cleared. Equally after updating the 3D selected part window these two windows are cleared. The process returns to the main loop in S407.

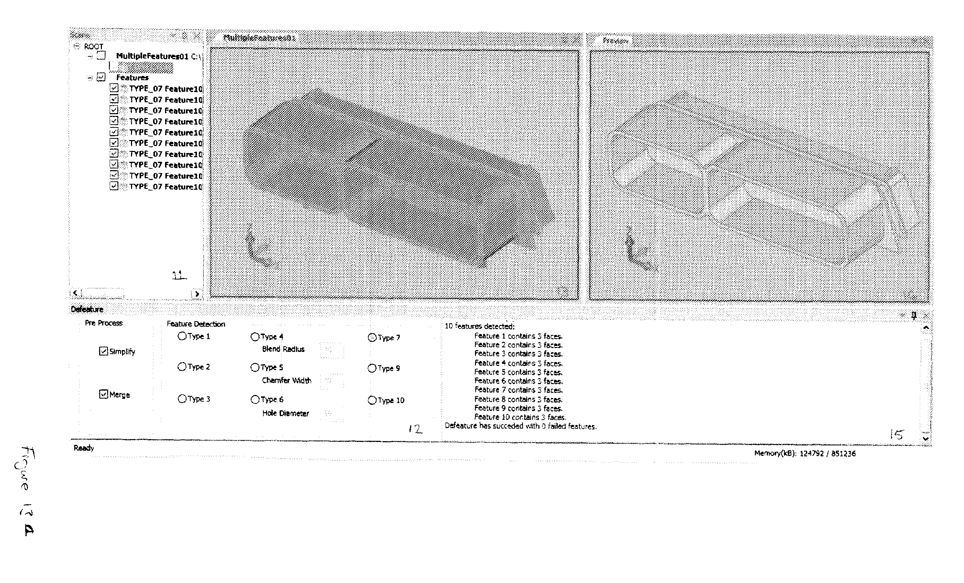

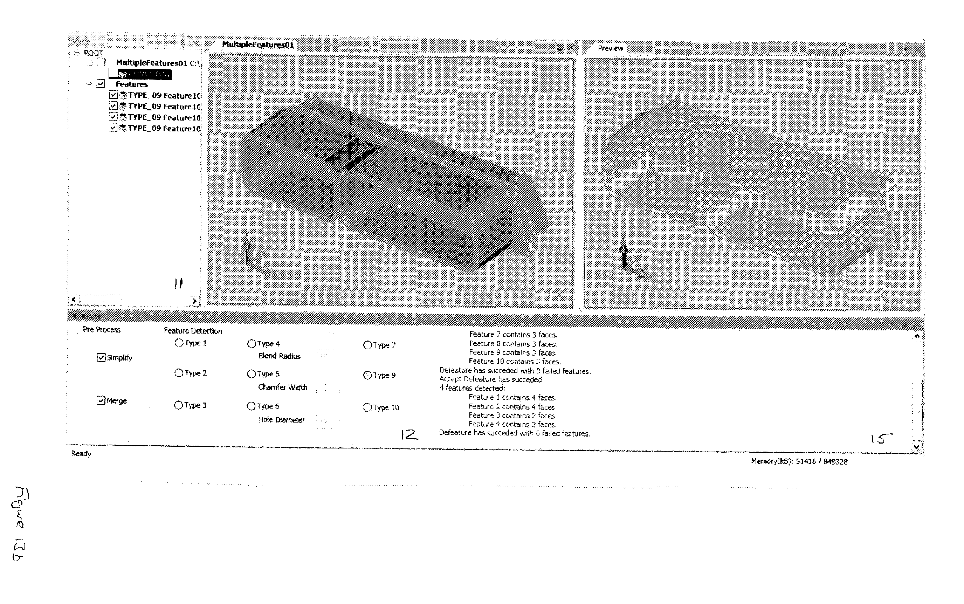

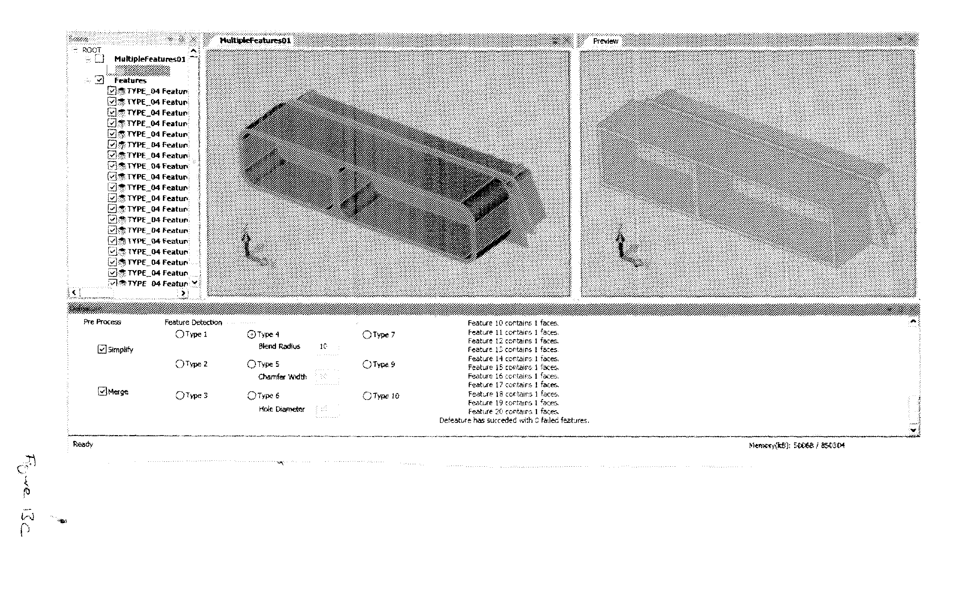

Of course this is only one embodiment of the GUI environment. Figure 13 is a view of a slightly different environment in which the top menu bar and feature menu bar are not show. Figure 13a has a model part tree-view window 11 which shows that a connector model is being processed. The same window shows all the features currently detected by the process. In this case, small cylinders have been detected and this is denoted by type 7 in the defeaturing window 12. The defeaturing window also indicates that pre-processing has been selected, for example to remove small solid body parts such as screws and to merge curved surfaces which have been separately defined. The model is shown with the selected parts highlighted in window 13 which can be viewed as a 3D selected part window. Window 14 is a 3D result window containing a 3D representation of the defeatured part in preview (that is before acceptance by the user). Finally, window 15 is a result text window. The numbered features, of which 7 are visible in the view given each have three faces. These are cylinder protrusions on the main body which are geometrically defined to consist of two half cylinder surfaces with oppositely directed output normal vectors pointing away from the cylinder protrusion and a top surface. In the 3D result window, these protrusions have been removed. Figure 13b has the same layout and shows the next step of the process in which features of type 9 (irregular blends) are currently selected. This feature corresponds for example to the valley of Figure 9l. The valleys at the top and bottom of the part are detected and removed.

In Figure 13c the regular blends are removed. These are feature type 4, and a maximum blend radius has been selected for blend detection. The blends have been removed as shown in the preview in the 3D result window. The resultant simplified model is better adapted for analysis.

In summary, embodiments of this invention require a CAD model file only and no CAD systems. They can use basic geometric elements of lines, arcs, surfaces, bodies and usually also vertex points, and their inherent topology connections. Calculating the outward normal vectors of surfaces that form a closed loop can identify whether a small feature is a solid, protrusion, hole or cavity unsuitable feature. Invention embodiments can automatically detect these types of features quickly by calculating the area of surfaces and orders in sequence of size, and starting with the smallest surface area, going through the surface topology to find a closed loop. For such closed-loop features we can calculate the volume to check if they are small enough for removal. Otherwise, a different modification process may be applied.

Invention embodiments also provide a fully automatic software tool for processing CAD models that include the detection technology as set out hereinbefore.

Further invention embodiments relate to a GUI software that provide the full functions of such an automatic software loop inside a graphical environment, together with further functions, for example for:
a. Visual inspection of CAD model;
b. Development of feature type combination set;
c. Helping to remedy failed features in the automated tool;
d. Sharing of view model with users at different location via communication medium.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

**1.** A computer-implemented method of geometric feature detection and modification comprising:
accessing a data file including a model of an object formed from basic geometric elements of the object, including lines, surfaces and at least one solid body element;
using an outward normal vector of at least one surface in conjunction with the basic geometric elements to automatically detect a geometric feature of the object which is unsuitable for analysis; and
modifying the unsuitable geometric feature to produce a modified model for analysis purposes.

**2.** A method according to claim 1, wherein the detection of an unsuitable geometric feature includes calculation of an outward normal vector for a surface and for at least one neighbouring surface.

**3.** A method according to claim 1 or 2, wherein the detection of an unsuitable geometric feature includes calculation of outward normal vectors for a set of adjacent surfaces forming a discrete feature.

**4.** A method according to any of the preceding claims, wherein modification includes reshaping or removing the unsuitable geometric feature.

**5.** A method according to any of the preceding claims, wherein one unsuitable geometric feature is a small geometric feature in the form of a cavity, hole, protrusion or solid body of any shape but smaller than a predetermined size and a corresponding modification is removal of the small unsuitable geometric feature, and preferably wherein the small unsuitable geometric features are detected by sorting the surfaces of the model in size order and checking starting with the smallest surface for an unsuitable geometric feature including that surface.

**6.** A method according to claim 5, wherein any small unsuitable geometric features are detected and removed before other types of unsuitable geometric feature are processed.

**7.** A method according to claims 5 or 6, wherein the object comprises more than one solid body element and after any small volume features have been removed from the entire object, each solid body element is processed in turn to detect and modify other unsuitable geometric features.

**8.** A method according to any of the preceding claims, wherein one unsuitable geometric feature is a cavity, hole, protrusion or solid body with at least one curved surface and a corresponding modification is to render the curved surface as a plurality of flat surfaces, preferably conserving the length and/or volume of the feature.

**9.** A method according to any of the preceding claims, wherein one unsuitable geometric feature is an edge finish applied at the intersection of two or more surfaces and a corresponding modification is reversing the effect of the edge finish by reinstating the continuity of the planes of the surfaces at the intersection.

**10.** A method according to any of the preceding claims, wherein one unsuitable geometric feature is a folded over portion of a sheet and a corresponding modification is replacement of the double layer and radius formed by the folded over portion with a corresponding single thicker portion having straight edges.

**11.** A method according to any of the preceding claims, wherein overlapping and/or adjoining unsuitable geometric features are detected and removed, one after the other.

**12.** A computing device having a graphical user interface and providing a computer-implemented method of geometric feature detection and modification using the interface, wherein the interface is operable:
to display an original representation of a data file including a model of an object formed from basic geometric elements of the object, including lines, surfaces and at least one solid body element;
to highlight on the representation a geometric feature of the object which is unsuitable for analysis and which has been detected using an outward normal vectors of at least one surface in conjunction with the basic geometric elements; and
to display a modified representation of the model with a modified unsuitable geometric feature.

**12.** A device according to claim 11, wherein the interface is operable to allow the user to specify the type of feature to be modified.

**13.** A device according to claim 11 or 12, wherein the interface is operable to display the original representation and the modified representation simultaneously and preferably the modified representation is a preview which may be accepted or rejected by the user.

**14.** A device according to any of claims 11 to 13, wherein the interface is also operable to display a representation of the model highlighting geometric features which have been selected for modification, but could not be automatically modified

**15.** A computer program which when executed on a computing device provides the graphical user interface of any of the preceding device claims or carries out the method of any of the preceding method claims.

**16.** A Computer Aided Engineering system comprising input means to read in a CAD file, output means to output a modified CAD file, and computing capacity operable to carry out the method of any of the preceding claims.
